(19) Europäisches Patentamt
European Patent Office
Office européen des brevets

(11) **EP 1 459 978 B1**

(12) **FASCICULE DE BREVET EUROPEEN**

(45) Date de publication et mention
de la délivrance du brevet:
**17.05.2006   Bulletin 2006/20**

(51) Int Cl.:
***B64D 45/04*** *(2006.01)*      ***G05D 1/06*** *(2006.01)*

(21) Numéro de dépôt: **04290356.7**

(22) Date de dépôt: **11.02.2004**

(54) **Procédé et dispositif pour déterminer un axe d'approche finale d'un aéronef pour une approche de non précision en vue d'un atterrissage de l'aeronef**

Verfahren und Vorrichtung zum Bestimmen eines Endanflugpfades eines Flugzeuges für einen Nicht-Präzisions-Landeanflug eines Flugzeuges

Method and device for determining a final approach path for aircraft for a non-precision approach during landing of aircraft

(84) Etats contractants désignés:
**AT BE BG CH CY CZ DE DK EE ES FI FR GB GR HU IE IT LI LU MC NL PT RO SE SI SK TR**

(30) Priorité: **19.03.2003  FR 0303334**

(43) Date de publication de la demande:
**22.09.2004   Bulletin 2004/39**

(73) Titulaire: **AIRBUS France**
**31060 Toulouse (FR)**

(72) Inventeurs:
• **Rouquette, Patrice**
**12740 La Loubiere (FR)**

• **Coussat, Olivier**
**69300 Caluire (FR)**

(74) Mandataire: **Hauer, Bernard**
**Cabinet Bonnétat**
**29, Rue de Saint-Pétersbourg**
**75008 Paris (FR)**

(56) Documents cités:
**US-A- 3 169 730          US-A- 3 666 929**
**US-A- 5 739 770**

**Description**

La présente invention concerne un procédé et un dispositif pour déterminer un axe d'approche finale d'un aéronef pour une approche de non précision, en vue d'un atterrissage de l'aéronef sur une piste d'atterrissage.

Dans le cadre de la présente invention, on entend par "approche de non précision" (en anglais "non precision approach") une approche qui n'est pas une approche de précision aux instruments, telle que par exemple une approche de type ILS ("Instrument Landing System"). On sait que, pour mettre en oeuvre une approche de précision aux instruments, on utilise des stations sol qui sont situées en bordure de piste et au moins un récepteur radio spécialisé monté à bord de l'aéronef, qui fournit un guidage horizontal et vertical avant et pendant l'atterrissage en présentant au pilote la déviation latérale par rapport à un axe d'approche et la déviation verticale par rapport à un plan de descente. Une telle approche de précision aux instruments apporte une assistance importante et efficace à l'atterrissage (par un guidage latéral et un guidage vertical), en particulier par mauvaise visibilité (brouillard, ...) ou en absence de visibilité.

Une approche de non précision, telle que considérée dans la présente invention, existe donc lorsque les informations précédentes ne sont pas disponibles, tout au moins en partie, de sorte qu'une approche de précision usuelle ne peut pas être mise en oeuvre.

Pour mettre en oeuvre une approche de non précision, il est nécessaire de déterminer une trajectoire virtuelle, correspondant au trajet théorique que doit suivre l'aéronef pendant cette approche. Le guidage de l'aéronef consiste alors à essayer d'annuler les éventuels écarts entre la position effective de l'aéronef et la position qu'il aurait s'il était sur cette trajectoire virtuelle.

Bien entendu, la précision de cette dernière est essentielle, au moins à proximité immédiate de la piste d'atterrissage, pour la réussite en toute sécurité de l'atterrissage.

Par le document US-3 666 929, on connaît un système de commande de vol pour commander un aéronef lors d'un vol de descente, suivant une trajectoire de transition légèrement incurvée, entre une première trajectoire de descente linéaire et une seconde trajectoire de descente linéaire.

La présente invention a pour objet de déterminer le dernier tronçon d'une telle trajectoire virtuelle. Plus précisément, elle concerne un procédé pour déterminer un axe d'approche finale d'un aéronef pour une approche de non précision, en vue d'un atterrissage de l'aéronef sur une piste d'atterrissage.

Selon l'invention, ledit procédé est remarquable en ce que :

a) on détermine un mode d'approche qui a été sélectionné par le pilote de l'aéronef, parmi une pluralité de modes d'approche prédéterminés ;

b) on sélectionne un segment caractéristique d'une trajectoire d'arrivée qui est relative au mode d'approche sélectionné ainsi déterminé ;
c) on détermine l'orientation de la projection au sol dudit segment caractéristique, par rapport à l'axe de ladite piste d'atterrissage ; et
d) en fonction de cette orientation, on détermine :

- un point d'ancrage dudit axe d'approche finale ;
- l'orientation dans un plan horizontal dudit axe d'approche finale ; et
- la pente dudit axe d'approche finale.

De plus, selon l'invention, à l'étape d), on détermine :

- comme orientation dudit axe d'approche finale, l'orientation dudit segment caractéristique ; et
- comme pente dudit axe d'approche finale, la pente dudit segment caractéristique.

Par ailleurs, avantageusement, lorsque la projection au sol dudit segment caractéristique est alignée avec l'axe de la piste d'atterrissage, on réalise à l'étape d) les opérations suivantes :

d1) on détermine un point caractéristique correspondant au point limite auquel le pilote doit remettre les gaz lorsque l'approche est manquée ;
d2) on détermine la position relative entre la projection au sol dudit point caractéristique et le seuil de la piste d'atterrissage ; et
d3) on détermine, en fonction de cette position relative, ledit point d'ancrage dudit axe d'approche finale.

Dans ce cas, lorsque la projection au sol du point caractéristique est située sur le ou en aval du seuil de la piste d'atterrissage selon le sens d'approche de l'aéronef, à l'étape d3) on détermine comme point d'ancrage dudit axe d'approche finale, le point d'intersection dudit segment caractéristique avec un plan horizontal situé à une altitude prédéterminée.

En revanche, lorsque la projection au sol du point caractéristique est située en amont du seuil de la piste d'atterrissage selon le sens d'approche de l'aéronef, à l'étape d3) on détermine comme point d'ancrage dudit axe d'approche finale, le point d'intersection de la prolongation vers le sol dudit segment caractéristique avec un plan horizontal situé à une altitude prédéterminée.

A présent, on s'intéresse au cas où la projection au sol dudit segment caractéristique n'est pas alignée avec l'axe de la piste d'atterrissage.

Dans ce cas, premièrement dans un premier mode de réalisation particulier, pour déterminer, à l'étape d), ledit point d'ancrage dudit axe d'approche finale :

- on détermine un point de référence à partir duquel le pilote est censé engager une rotation de l'aéronef pour rejoindre un plan vertical contenant l'axe de la piste d'atterrissage, selon une trajectoire de référence ;
- on détermine ladite trajectoire de référence ;
- on détermine une droite horizontale qui est située dans un plan horizontal se trouvant à une altitude prédéterminée et qui est confondue en partie avec la projection verticale sur ledit plan horizontal dudit segment caractéristique ; et
- on détermine, comme point d'ancrage, le point qui est tel que :

    d'une part, la projection verticale de l'axe d'approche finale sur ledit plan horizontal soit confondue en partie avec ladite droite horizontale ; et

    d'autre part, la distance entre ledit point et le point de référence selon l'axe d'approche finale soit sensiblement égale à la distance entre ledit point de référence et le seuil de la piste d'atterrissage le long de ladite trajectoire de référence.

Deuxièmement, dans un deuxième mode de réalisation particulier, pour déterminer, à l'étape d), ledit point d'ancrage dudit axe d'approche finale :

- on détermine un point de référencé à partir duquel le pilote est censé engager une rotation de l'aéronef pour rejoindre un plan vertical contenant l'axe de la piste d'atterrissage, selon une trajectoire de référence ;
- on détermine ladite trajectoire de référence ; et
- on détermine, comme point d'ancrage, le point qui est tel que la distance entre ce dernier et la projection verticale dudit point de référence sur un plan horizontal situé à une altitude prédéterminée est sensiblement égale à la distance entre les projections verticales sur ledit plan horizontal dudit point de référence et du seuil de la piste d'atterrissage, selon la projection verticale de ladite trajectoire de référence sur ledit plan horizontal.

En outre, troisièmement, dans une variante de réalisation, pour déterminer, à l'étape d), ledit point d'ancrage dudit axe d'approche finale :

- on détermine un point de référence à partir duquel le pilote est censé engager une rotation de l'aéronef pour rejoindre un plan vertical contenant l'axe de la piste d'atterrissage, selon une trajectoire de référence ; et
- on détermine, comme point d'ancrage, le point qui est tel que la distance entre ce dernier et ledit point de référence est sensiblement égale à la distance entre ledit point de référence et le seuil de la piste d'atterrissage.

Par ailleurs, quatrièmement, dans un mode de réalisation préféré, pour déterminer, à l'étape d), ledit point d'ancrage dudit axe d'approche finale :

- on détermine une droite horizontale qui est située dans un plan horizontal se trouvant à une altitude prédéterminée et qui est confondue en partie avec la projection verticale sur ledit plan horizontal dudit segment caractéristique ;
- on détermine un point intermédiaire qui correspond à l'intersection de ladite droite horizontale avec la projection verticale sur ledit plan horizontal de l'axe de la piste d'atterrissage ;
- on détermine un cercle ayant comme centré ledit point intermédiaire est comme rayon la distance entre ce point intermédiaire et la projection verticale sur ledit plan horizontal du seuil de la piste d'atterrissage ; et
- on détermine, comme point d'ancrage, l'intersection entre ledit cercle et ladite droite horizontale.

Cinquièmement, dans un dernier mode de réalisation particulier :

- dans une première variante, à l'étape d), on utilise comme point d'ancrage dudit axe d'approche finale un point final prédéterminé, qui est caractéristique dudit mode d'approche sélectionné par le pilote de l'aéronef ; et
- dans une seconde variante, pour déterminer, à l'étape d), ledit point d'ancrage dudit axe d'approche finale :

    . on détermine un point final prédéterminé, qui est caractéristique dudit mode d'approche sélectionné par le pilote ; et
    . on détermine, comme point d'ancrage, le point ayant :

        * comme longitude et latitude, la longitude et la latitude dudit point final ; et
        * comme altitude, une altitude prédéterminée.

A présent, on s'intéresse au cas où la projection au sol dudit segment caractéristique est parallèle à l'axe de la piste d'atterrissage, sans être alignée avec ce dernier.

Dans ce cas, premièrement, dans un mode de réalisation particulier, pour déterminer, à l'étape d), ledit point d'ancrage dudit axe d'approche finale :

- on détermine un point de référence à partir duquel le pilote est censé engager une rotation de l'aéronef pour rejoindre un plan vertical contenant l'axe de la piste d'atterrissage, selon une trajectoire de référence ;
- on détermine ladite trajectoire de référence ; et

- on détermine, comme point d'ancrage, le point qui est tel que la distance entre ce dernier et ledit point de référence est sensiblement égale à la distance, lé long de ladite trajectoire de référence, entre ledit point de référence et la projection verticale du seuil de la piste d'atterrissage sur ladite trajectoire de référence.

Deuxièmement, dans un mode de réalisation préféré, pour déterminer, à l'étape d), ledit point d'ancrage dudit axe d'approche finale :

- on détermine un point de référence à partir duquel le pilote est censé engager une rotation de l'aéronef pour rejoindre un plan vertical contenant l'axe de la piste d'atterrissage, selon une trajectoire de référence ;
- on détermine une droite horizontale qui est située dans un plan horizontal se trouvant à une altitude prédéterminée et qui est confondue en partie avec la projection verticale sur ledit plan horizontal dudit segment caractéristique ;
- on détermine un cercle ayant comme centre ledit point de référence et comme rayon la distance entre ce point de référence et la projection verticale sur ledit plan horizontal du seuil de la piste d'atterrissage ; et
- on détermine, comme point d'ancrage, le point d'intersection entre ledit cercle et ladite droite horizontale.

En outre, troisièmement, dans un autre mode de réalisation, pour déterminer, à l'étape d), ledit point d'ancrage dudit axe d'approche finale :

- on détermine une droite horizontale qui est située dans un plan horizontal se trouvant à une altitude prédéterminée et qui est confondue en partie avec la projection verticale sur ledit plan horizontal duditsegment caractéristique ;
- on détermine un point intermédiaire correspondant à la projection verticale sur ledit plan horizontal du seuil de ladite piste d'atterrissage ; et
- on détermine, comme point d'ancrage, le point correspondant à la projection orthogonale dudit point intermédiaire sur ladite droite horizontale.

Dans le cadre de la présente invention, ladite altitude prédéterminée précitée correspond :

- à l'altitude du seuil de la piste d'atterrissage ; ou
- à l'altitude du seuil de la piste d'atterrissage, augmentée d'une valeur prédéterminée ; ou
- à l'altitude du sol à l'emplacement dudit point d'ancrage.

Par ailleurs, concernant ledit segment caractéristique :

- dans un mode de réalisation simplifié, ledit segment caractéristique correspond au dernier segment de ladite trajectoire d'arrivée (qui est relative au mode d'approche sélectionné par le pilote, comme indiqué précédemment) ; et
- dans un autre mode de réalisation, ledit segment caractéristique correspond au segment de ladite trajectoire d'arrivée, qui franchit une altitude MDA qui est caractéristique du mode d'approche sélectionné par le pilote de l'aéronef. Ceci permet au pilote d'avoir une trajectoire stabilisée dès lors qu'il franchit (en descente) ladite altitude MDA.

La présente invention concerne également un dispositif pour mettre en oeuvre le procédé précité.
Les figures du dessin annexé feront bien comprendre comment l'invention peut être réalisée. Sur ces figures, des références identiques désignent des éléments semblables.
La figure 1 est le schéma synoptique d'un dispositif conforme à l'invention.
Les figures 2 et 3 sont deux graphiques permettant de bien comprendre l'objet de la présente invention.
Les figures 4 à 8 illustrent différents modes de mise en oeuvre de la présente invention.
Le dispositif 1 conforme à l'invention et représenté schématiquement sur la figure 1 est embarqué à bord d'un aéronef, en particulier d'un avion de transport civil, et est destiné à une approche de non précision, en vue de l'atterrissage de l'aéronef sur une piste d'atterrissage 5.
Une approche de non précision peut être mise en oeuvre par l'intermédiaire de l'un d'une pluralité de modes d'approche possibles, qui est sélectionné par le pilote, et pour lequel :

- on détermine un axe d'approche virtuel, notamment à partir d'informations contenues dans une base de données (non représentée) embarquée à bord de l'aéronef ; et
- on calcule les déviations latérale et verticale de la position de l'aéronef par rapport à cet axe d'approche virtuel.

L'aéronef est alors piloté de manière à annuler ces déviations.
Le dispositif 1 a notamment pour objet de déterminer la dernière partie de cet axe d'approche virtuel à proximité immédiate de la piste d'atterrissage 5, dernière partie qui est appelée axe d'approche finale Aa.
A cet effet, ledit dispositif 1 comporte :

- des sources d'informations 2 comprenant, par exemple, au moins un calculateur de gestion de vol, de préférence de type FMS ("Flight Management System") ; et
- des moyens 3 de traitement d'informations, par exemple un récepteur multimode d'aide à l'atterrissage, de type MMR ("Multi Mode Receiver"), qui sont reliés auxdites sources d'informations 2 et qui déterminent ledit axe d'approche finale Aa.

Le dispositif 1 comporte également un système utilisateur 4, par exemple un pilote automatique de l'aéronef, qui utilise les informations fournies par lesdits moyens 3 de traitement d'informations, en particulier pour guider l'aéronef jusqu'à son atterrissage sur la piste d'atterrissage 5.

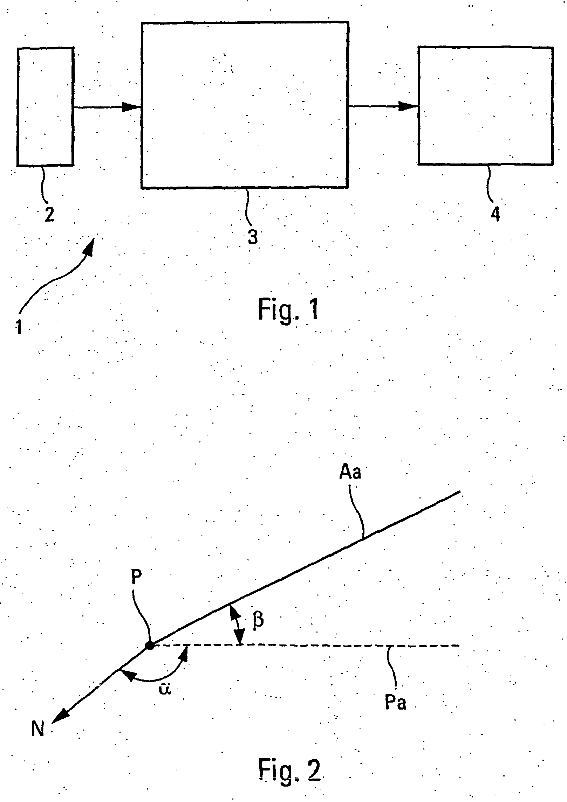

On caractérise ledit axe d'approche finale Aa au moyen des paramètres suivants (figure 2) :

- la position (latitude, longitude, altitude) d'un point d'ancrage P de cet axe d'approche (finale) Aa ;
- l'orientation de cet axe d'approche (finale) Aa, caractérisée par un angle $\alpha$, dans un plan horizontal, entre une direction prédéterminée N correspondant par exemple au Nord et la projection Pa dé cet axe d'approche Aa sur ce plan horizontal ; et
- la pente de cet axe d'approche Aa, caractérisée par un angle $\beta$, dans un plan vertical, entre ladite projection Pa de l'axe d'approche Aa sur le plan horizontal et ledit axe d'approche Aa.

Dans un mode de réalisation préféré de l'invention, l'altitude du point P est égale à l'altitude du seuil S de la piste d'atterrissage 5, augmentée d'une valeur prédéterminée, de préférence égale à une valeur "TCH" ("Threshold Crossing Height" en anglais, c'est-à-dire hauteur du franchissement du seuil en français) correspondant à la hauteur de passage de l'aéronef au-dessus du seuil S de la piste 5. Cette valeur "TCH" est généralement publiée sur les cartes d'approche et codée dans une base de données (non représentée) de l'aéronef. Elle est souvent égale à 50 pieds (environ 15 mètres). Si aucune hauteur TCH n'est publiée, l'altitude du point P peut être choisie égale à l'altitude du seuil de piste S, augmentée d'une valeur prédéterminée, de préférence égale à 50 pieds.

En revanche, dans une première variante de réalisation de l'invention, cette altitude du point P est égale à l'altitude du seuil S de la piste d'atterrissage 5 et, dans une seconde variante, elle est égale à l'altitude du sol à l'emplacement (latitude, longitude) du point P.

Dans la description ci-après, on parle d'altitude prédéterminée, pour l'altitude obtenue par l'une quelconque des manières précédentes.

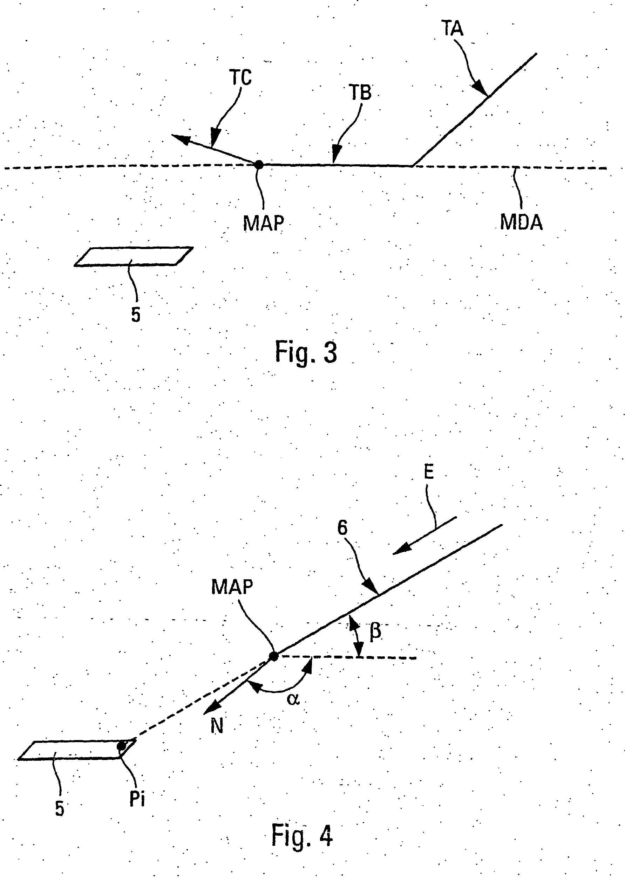

Pour déterminer ledit axe d'approche (finale) Aa, on utilise les paramètres connus suivants, qui sont caractéristiques du mode d'approche sélectionné par le pilote pour mettre en oeuvre l'approche de non précision, et qui sont représentés sur la figure 3 :

- un point caractéristique MAP ("Missed Approach Point" en anglais c'est-à-dire point d'approche interrompue en français) qui est publié et qui correspond au point limite auquel le pilote doit remettre les gaz au plus tard lorsque l'approche correspondante est manquée (ce qui est notamment le cas lorsqu'il ne voit pas la piste 5 avant d'arriver à ce point MAP). Généralement, le point MAP est le dernier point du plan de vol entré dans le système de gestion de vol FMS de l'aéronef ; et
- une altitude caractéristique MDA ("Minimum Descent Altitude" en anglais, c'est-à-dire altitude minimale de descente en français) qui est également publiée.

On sait que la manière de piloter l'approche, de façon usuelle, hors les modes d'approche prévus dans la présente invention, dépend de la position du point MAP et de l'altitude MDA :

- si l'aéronef atteint le point MAP avant d'atteindre l'altitude MDA, le pilote décide soit de continuer l'approche s'il a des références visuelles, soit de remettre les gaz dès le point MAP s'il ne voit pas la piste 5 ;
- si l'aéronef atteint (en descente) l'altitude MDA avant d'atteindre le point MAP (trajectoire TA de la figure 3), le pilote décide soit de continuer l'approche s'il a des références visuelles, soit de voler en palier à l'altitude MDA (trajectoire TB) et, s'il n'a pas de références visuelles avant d'atteindre le point MAP, il remet les gaz lorsqu'il arrive audit point MAP (trajectoire TC).

On notera que le procédé objet de la présente invention est avantageux en ce qu'il permet de guider l'aéronef jusqu'au point P et donc potentiellement jusqu'au sol, à partir des déviations éventuelles entre la position effective de l'aéronef et la position qu'il a (aurait) s'il est (était) sur l'axe d'approche Aa, déviations qui sont déterminées par lesdits moyens de traitement d'informations 3 ou par ledit système utilisateur 4.

Dans le cadre de la présente invention, on distingue plusieurs façons de déterminer ledit axe d'approche Aa selon la position du point MAP relativement au seuil S de la piste d'atterrissage 5 et selon l'orientation d'un segment caractéristique 6 d'une trajectoire d'arrivée (qui est caractéristique du mode d'approche sélectionné par le pilote), relativement à l'axe Ap de la pisté 5. Dans la description ci-après, on prend en compte le dernier segment de la trajectoire d'arrivée comme segment caractéristique 6.

On considère à présent une première situation dans laquelle l'axe Ap de la piste d'atterrissage 5 est aligné avec la projection au sol dudit dernier segment 6 de la trajectoire d'arrivée.

Premièrement, selon l'invention, lorsque la projection verticale au sol du point MAP correspondant au mode d'approche sélectionné par le pilote, est située sur le ou en aval du seuil de piste S par rapport au sens d'approche E de l'aéronef, on détermine cet axe d'approche Aa de la façon indiquée ci-après.

Pour chaque mode d'approche publié, on dispose, dans une base de données, d'éléments permettant de caractériser les différents segments de ce mode d'approche publié (ces éléments sont aussi imprimés sur les cartes d'approche). A partir desdits éléments, l'axe d'approche Aa peut être caractérisé comme suit :

le point d'ancrage P est le point d'intersection du dernier segment 6 du mode d'approche publié (c'est-à-dire de la trajectoire d'arrivée) avec le plan horizontal dont l'altitude correspond à l'altitude prédéterminée, précisée ci-dessus ;
- les angles d'orientation α et de pente β de cet axe d'approche Aa sont ceux qui caractérisent ledit dernier segment 6 du mode d'approche publié sélectionné, de telle façon que ledit dernier segment 6 est confondu avec une partie de l'axe d'approche Aa.

Par ailleurs, lorsque la projection verticale au sol du point MAP correspondant au mode d'approche sélectionné par le pilote, est située en amont du seuil de piste S par rapport au sens d'approche E de l'aéronef, on détermine cet axe d'approche Aa de la façon indiquée ci-après (figure 4) :

- on considère le dernier segment 6 de la trajectoire d'arrivée, dont les caractéristiques sont publiées et intégrées dans une base de données de l'aéronef de la même façon que dans le cas précédent. Ce dernier segment 6 se termine généralement au point MAP. Ce point est alors situé à une altitude positive non nulle relativement à l'altitude de la piste 5. On choisit comme angles d'orientation α et de pente β de l'axe d'approche Aa ceux qui caractérisent ledit dernier segment 6 ;
- on prolonge ce dernier segment 6 en ligne droite vers le sol et on détermine son point d'intersection Pi avec le plan horizontal dont l'altitude correspond à ladite altitude prédéterminée. Le point d'ancrage P de l'axe d'approche Aa est choisi confondu avec ledit point d'intersection Pi.

L'axe d'approche Aa déterminé selon l'invention correspond donc, dans ce cas, à une demi-droite aboutissant au point Pi, dont l'orientation et la pente sont définies par les angles α et β. Les caractéristiques dudit dernier segment 6 sont telles que le point d'intersection Pi est généralement situé au-dessus du seuil de piste S.

On considère à présent une deuxième situation dans laquelle l'axe Ap de la piste d'atterrissage 5, n'est pas aligné avec la projection au sol du dernier segment 6 de la trajectoire d'arrivée.

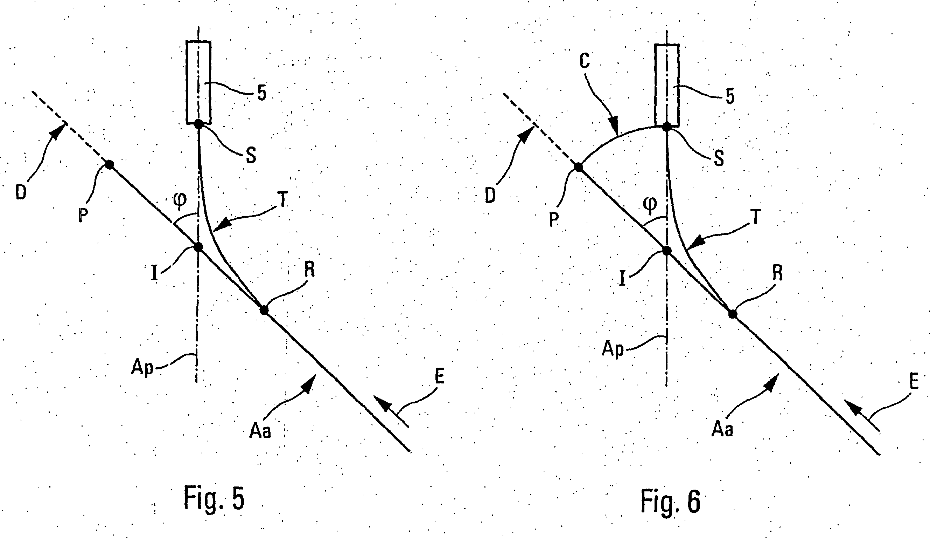

La figure 5 représente, en vue de dessus, un exemple d'approche d'un aéronef sur une piste d'atterrissage 5 dans le cas où l'axe de piste Ap et la projection au sol du dernier segment 6 de la trajectoire d'arrivée relative au mode d'approche sélectionné, ne sont pas alignés. La droite D représentée sur cette figure 5 est une droite d'un plan horizontal dont une partie est confondue avec la projection verticale sur ledit plan horizontal dudit dernier segment 6. L'altitude de ce plan horizontal est de préférence choisie égale à ladite altitude prédéterminée, définie précédemment. Toutefois, sans sortir du cadre de la présente invention, on peut également raisonner en termes de projection verticale sur un plan horizontal correspondant à une autre altitude, par exemple l'altitude du seuil de piste S. Le point I correspond à l'intersection de ladite droite D avec la projection vertical sur ce plan horizontal de l'axe de piste Ap. Le point S correspond au point de l'axe de piste Ap situé sur le seuil de piste. Le point R peut être défini comme le point à partir duquel le pilote est censé engager (en pilotage manuel) une rotation de l'aéronef en l'écartant de sa position théorique sur l'axe d'approche Aa, en suivant une trajectoire T, pour rejoindre progressivement un plan vertical contenant l'axe Ap de la piste d'atterrissage 5 et poser l'aéronef sur ladite piste d'atterrissage 5 sensiblement audit point S. Le point R et la trajectoire T peuvent, par exemple, être déterminés par un système de gestion de vol FMS de l'aéronef, qui comporte généralement des fonctionnalités lui permettant de calculer une trajectoire théorique de transition entre deux segments consécutifs d'un plan de vol.

On choisit comme angles d'orientation α et de pente β de l'axe d'approche Aa ceux qui caractérisent ledit dernier segment 6.

En outre, le point d'ancrage P de l'axe d'approche Aa est choisi de façon à ce que, d'une part, la projection verticale de cet axe Aa sur ledit plan horizontal soit confondue avec une partie de la droite D (l'axe Aa est donc dans le même plan vertical que ledit dernier segment 6) et, d'autre part, la distance entre le point R et le point d'ancrage P selon l'axe d'approche Aa soit sensiblement égale à la distance entre le point R et la projection verticale du point S sur la trajectoire T, le long de cette trajectoire T (considérée dans l'espace tridimensionnel).

Sans sortir du cadre de la présente invention, on peut aussi détermineur le point d'ancrage P en raisonnant sur des projections verticales sur ledit plan horizontal : on choisit alors le point d'ancrage P de façon à ce que la distance entre ce point d'ancrage P et la projection verticale du point R sur ce plan horizontal soit sensiblement égale à la distance entre ladite projection verticale du point R sur ce plan horizontal et la projection verticale du point S sur ce plan horizontal, selon la projection verticale de la trajectoire T sur ce plan horizontal.

Ce mode de détermination de l'axe d'approche Aa est avantageux par le fait que le dernier segment 6 est sensiblement confondu avec une partie de cet axe Aa, ce qui permet de conserver sur la trajectoire T la même pente que celle de cet axe d'approche Aa, même pour des valeurs élevées de l'angle φ entre la droite D et l'axe de piste Ap. Il existe des approches publiées pour lesquelles la valeur de cet angle φ peut aller jusqu'à environ 90° ou 100°.

De façon avantageuse, le rayon de courbure Rc de la trajectoire T, calculée par exemple par le système FMS, dépend de la vitesse de l'aéronef. Ce rayon de courbure Rc peut, notamment, être calculée selon la formule suivante :

$$Rc = Vs \cdot \frac{Vs}{\tan(R_{max}) \cdot g}$$

dans laquelle :

- Vs est la vitesse d'approche soumise aux conditions de vent ("Ground speed") ;
- tan est la tangente ;
- $R_{max}$ est l'angle de roulis maximum dans cette phase, généralement 30° ("Maximum Roll angle") ; et
- g est l'accélération de la pesanteur.

Dans un mode de réalisation simplifié de l'invention, on choisit un point d'ancrage P tel que la distance du point R audit point d'ancrage P est sensiblement égale à la distance, en ligne droite, du point R au point S.

Par ailleurs, dans un mode de réalisation préféré de l'invention, concernant le cas considéré (axe de piste Ap non aligné avec la projection au sol du dernier segment 6), le point P est déterminé en faisant une approximation par excès de ladite distance entre le point R et ce point P, comme indiqué ci-après.

La figure 6 représente, en vue de dessus, un exemple d'approche d'un aéronef sur une piste d'atterrissage 5, similaire à l'exemple d'approche de la figure 5. Le point I correspond à l'intersection de la droite D avec la projection verticale sur ledit plan horizontal de l'axe de piste Ap. On considère dans ce plan horizontal un cercle de centre I, passant par la projection verticale du point S sur ledit plan horizontal, dont un arc de cercle C est représenté sur la figure 6. Le point d'ancrage P de l'axe d'approche Aa est celui des points d'intersection de ce cercle et de la droite D qui est situé en aval du point I, sur cette droite D, par rapport au sens d'approche E de l'aéronef.

En raisonnant dans ledit plan horizontal, on constate que la distance entre le point P et la projection verticale du point R sur ce plan horizonal est égale à la somme, d'une part, de la distance entre le point I et la projection verticale du point R sur ce plan horizontal et, d'autre part, de la distance entre le point I et la projection verticale du point S sur ce plan horizontal (puisque la distance entre le point I et le point P est égale à la distance entre le point I et la projection verticale du point S sur ce plan horizontal, le point P et la projection verticale du point S sur ce plan horizontal étant sur le même cercle de centre I). La somme desdites distances est légèrement supérieure à la distance du point R au point S le long de la projection verticale de la trajectoire T sur ledit plan horizontal, tout en constituant une bonne approximation de cette dernière distance. Il en résulte que l'axe d'approche Aa correspondant à ce mode préféré de réalisation se situe dans le même plan vertical que l'axe Aa défini pour l'exemple de la figure 5, légèrement au-dessus de celui-ci. Cela ne pose pas de problème puisque les marges d'altitude de sécurité de l'aéronef par rapport au relief sont respectées, étant donné qu'une partie de l'axe Aa pour l'exemple de la figure 5 est sensiblement confondue avec le dernier segment 6 du mode d'approche publié sélectionné.

Ce mode de réalisation préféré de l'invention présente l'avantage de permettre une détermination très simple du point P.

Dans un autre mode de réalisation de l'invention correspondant au cas considéré (axe de piste Ap non aligné avec la projection au sol du dernier segment 6), si un point final FEP ("Final End Point") est défini pour le mode d'approche publié sélectionné par le pilote, on choisit ce point FEP comme point d'ancrage P de l'axe d'approche Aa.

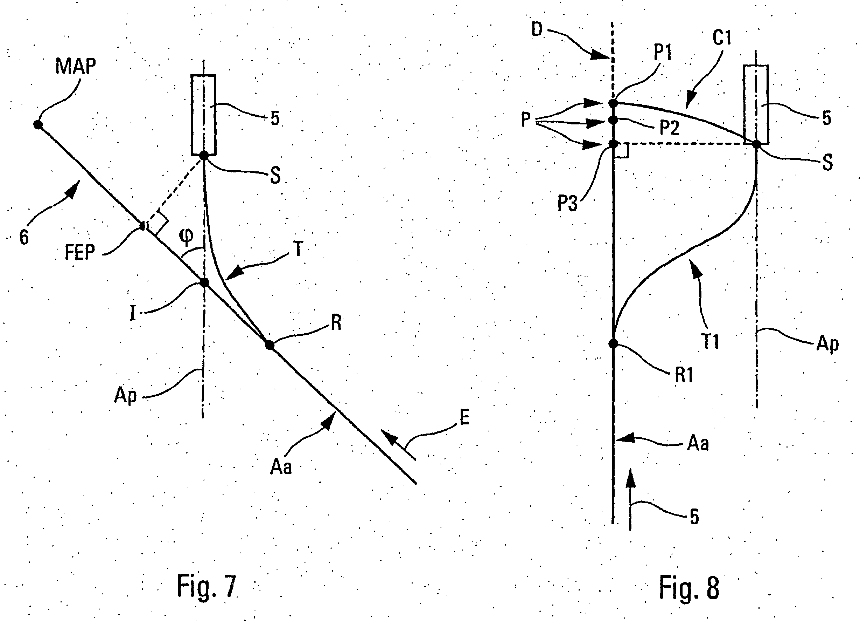

On sait que le point FEP est défini par la norme "ARINC 424", issue 15. La projection verticale de ce point FEP sur un plan horizontal contenant le point S correspond à la projection orthogonale du point S sur la projection du dernier segment 6 du mode d'approche publié sélectionné, sur ledit plan horizontal contenant le point S (figure 7). Pour une approche publiée, un point FEP n'est valablement défini que si la projection verticale du point MAP sur ledit plan horizontal se situe en aval de ce point FEP (dans le sens d'approche E de l'aéronef) sur une droite D, dont une partie est confondue avec la projection dudit dernier segment 6.

Ce mode de réalisation est avantageux en ce qu'il permet une détermination très simple du point P (aucun calcul n'est nécessaire, puisque les coordonnées du point FEP sont publiées et codées dans une base de données de l'aéronef lorsque ce point existe).

On notera que les coordonnées publiées du point FEP comportent sa latitude et sa longitude, mais aussi son altitude. Il n'est donc pas nécessaire de définir l'altitude du point P de la façon envisagée précédemment. Toutefois, dans une variante de ce mode de réalisation, on peut aussi choisir un point P dont la latitude et la longitude correspondent à celles du point FEP, mais dont l'altitude est définie comme indiqué précédemment.

On considère à présent une troisième situation dans laquelle l'axe de piste Ap est parallèle à la projection au sol du dernier segment 6 du mode d'approche sélectionné, et est distinct de cette projection au sol dudit dernier segment 6.

Dans cette troisième situation, il n'existé pas de point d'intersection entre une droite D et la projection verticale de l'axe de piste Ap dans le plan horizontal contenant cette droite D (figure 8).

De la même façon que pour le point R précédent, on définit, dans un mode de réalisation particulier, un point R1 et une trajectoire théorique T1 suivie par l'aéronef pour rejoindre la piste d'atterrissage 5 depuis le dernier segment 6. A la différence du cas précédent, cette trajectoire T1 doit comporter au moins deux zones de courbure de centres distincts. De façon similaire, on définit alors l'axe d'approche Aa dans le même plan vertical que le dernier segment 6, de mêmes angles d'orientation $\alpha$ et de pente $\beta$ que celui-ci, et le point d'ancrage P de cet axe Aa est choisi confondu avec un point P2 qui est tel que la distance entre le point R1 et ce point P2 soit sensiblement égale à la distance du point R1 à la projection verticale du point S sur la trajectoire T1, le long de cette trajectoire T1.

En outre, dans un mode de réalisation préféré, on considère un cercle de centre R1 dans le plan horizontal dont l'altitude correspond à ladite altitude prédéterminée. Ce cercle, dont un arc C1 est représenté sur la figure 8, passe par la projection verticale du point S sur ce plan horizontal. Le point d'ancrage P de l'axe Aa est alors choisi confondu avec un point P1, qui est celui des points d'intersection de ce cercle et de la droite D qui est situé en aval du point R1, sur cette droite D, par rapport au sens d'approche E de l'aéronef.

Par ailleurs, dans un autre mode de réalisation de l'invention, le point d'ancrage P de l'axe d'approche finale Aa est choisi confondu avec un point P3 correspondant à la projection orthogonale, sur le plan horizontal de même altitude que ladite altitude prédéterminée, du point correspondant à la projection verticale du point S sur ce plan horizontal.

Dans la description précédente, pour déterminer l'axe d'approche Aa, on a pris en considération le dernier segment 6 de la trajectoire d'arrivée correspondant au mode d'approche publié sélectionné. Dans une variante de réalisation de l'invention, plutôt que ledit dernier segment 6, on prend en considération le segment de cette trajectoire d'arrivée qui franchit en descente l'altitude MDA. On utilise alors le procédé de détermination de l'axe Aa décrit dans les modes de réalisation précédents en prenant en compte le segment ainsi déterminé plutôt que ledit dernier segment 6.

Cette variante de réalisation présente l'avantage de permettre au pilote d'avoir une trajectoire stabilisée dès lors qu'il franchit en descente l'altitude MDA, c'est-à-dire qu'il n'a alors plus besoin d'effectuer des trajectoires en virage pour rejoindre des segments d'approche consécutifs mais il doit seulement effectuer un dernier virage pour aligner à vue l'aéronef avec la piste d'atterrissage 5.

## Revendications

1. Procédé pour déterminer un axe d'approche finale (Aa) d'un aéronef pour une approche de non précision en vue d'un atterrissage de l'aéronef sur une piste d'atterrissage (5), le procédé comportant les étapes suivantes :

   a) on détermine un mode d'approche qui a été sélectionné par le pilote de l'aéronef, parmi une pluralité de modes d'approche prédéterminés ;
   b) on sélectionne un segment caractéristique (6) d'une trajectoire d'arrivée qui est relative au mode d'approche sélectionné ainsi déterminé ;
   c) on détermine l'orientation de la projection au sol dudit segment caractéristique (6), par rapport à l'axe (Ap) de ladite piste d'atterrissage (5) ; **caractérisé en ce que**
   d) en fonction de cette orientation, on détermine :

   - un point d'ancrage (P) dudit axe d'approche finale (Aa) ;
   - l'orientation ($\alpha$) dans un plan horizontal dudit axe d'approche finale. (Aa) ; et
   - la pente ($\beta$) dudit axe d'approche finale (Aa).

2. Procédé selon la revendication 1, **caractérisé en ce qu'**à l'étape d), on détermine :

   - comme orientation ($\alpha$) dudit axe d'approche finale (Aa), l'orientation dudit segment caractéristique (6) ; et
   - comme pente ($\beta$) dudit axe d'approche finale (Aa), la pente dudit segment caractéristique (6).

3. Procédé selon l'une des revendications 1 et 2, **caractérisé en ce que**, lorsque la projection au sol dudit segment caractéristique (6) est alignée avec l'axe (Ap) de la piste d'atterrissage (5), on réalise à l'étape d) les opérations suivantes :

   d1) on détermine un point caractéristique (MAP) correspondant au point limite auquel le pilote doit remettre les gaz lorsque l'approche est manquée ;
   d2) on détermine la position relative entre la projection au sol dudit point caractéristique (MAP) et le seuil (S) de la piste d'atterrissage (5) ; et
   d3) on détermine, en fonction de cette position relative, ledit point d'ancrage (P) dudit axe d'approche finale (Aa).

4. Procédé selon la revendication 3, **caractérisé en ce que**, lorsque la projection au sol du point caractéristique (MAP) est située sur le ou naval du seuil (S) de la piste d'atterrissage (5) selon le sens d'approche (E) de l'aéronef, à l'étape d3) on détermine comme point d'ancrage (P) dudit axe d'approche finale (Aa), le point d'intersection dudit segment caractéristique (6) avec un plan horizontal situé à une altitude prédéterminée.

5. Procédé selon la revendication 3, **caractérisé en ce que**, lorsque la projection au sol du point caractéristique (MAP) est située en amont du seuil (S) de la piste d'atterrissage (5) selon le sens d'approche (E) de l'aéronef, à l'étape d3) on détermine comme point d'ancrage (P) dudit axe d'approche finale (Aa), le point d'intersection (Pi) de la prolongation vers le sol dudit segment caractéristique (6) avec un plan horizontal situé à une altitude prédéterminée.

6. Procédé selon l'une des revendications 1 et 2, **caractérisé en ce que**, lorsque la projection au sol dudit segment caractéristique (6) n'est pas alignée avec l'axe (Ap) de la piste d'atterrissage (5), pour déterminer, à l'étape d), ledit point d'ancrage (P) dudit axe d'approche finale (Aa) :

   - on détermine un point de référence (R) à partir duquel le pilote est censé engager une rotation de l'aéronef pour rejoindre un plan vertical contenant l'axe (Ap) de la piste d'atterrissage (5), selon une trajectoire de référence (T) ;
   - on détermine ladite trajectoire de référence (T) ;
   - on détermine une droite horizontale (D) qui.est située dans un plan horizontal se trouvant à une altitude prédéterminée et qui est confondue en partie avec la projection verticale sur ledit plan horizontal dudit segment caractéristique (6) ; et
   - on détermine, comme point d'ancrage (P), le point qui est tel que :

      . d'une part, la projection verticale de l'axe d'approche finale (Aa) sur ledit plan horizontal soit confondue en partie avec ladite droite horizontale (D) ; et
      . d'autre part, la distance entre ledit point et le point de référence (R) selon l'axe d'approche finale (Aa) soit sensiblement égale à la distance entre ledit point de référence (R) et le seuil (S) de la piste d'atterrissage (5) le long de ladite trajectoire de référence (T).

7. Procédé selon l'une des revendications 1 et 2, **caractérisé en ce que**, lorsque la projection au sol dudit segment caractéristique (6) n'est pas alignée avec l'axe (Ap) de la piste d'atterrissage (5), pour déterminer, à l'étape d), ledit point d'ancrage (P) dudit axe d'approche finale (Aa) :

   - on détermine un point de référence (R) à partir duquel le pilote est censé engager une rotation de l'aéronef pour rejoindre un plan vertical contenant l'axe (Ap) de la piste d'atterrissage (5), selon une trajectoire de référence (T) ;
   - on détermine ladite trajectoire de référence (T) ; et
   - on détermine, comme point d'ancrage (P), le point qui est tel que la distance entre ce dernier et la projection verticale dudit point de référence (R) sur un plan horizontal situé à une altitude prédéterminée est sensiblement égale à la distance entre les projections verticales sur ledit plan horizontal dudit point de référence (R) et du seuil (S) de la piste d'atterrissage (5), selon la projection verticale de ladite trajectoire de référence (T) sur ledit plan horizontal.

8. Procédé selon l'une des revendications 1 et 2, **caractérisé en ce que**, lorsque la projection au sol dudit segment caractéristique (6) n'est pas alignée avec l'axe (Ap) de ia piste d'atterrissage (5), pour déterminer, à l'étape d), ledit point d'ancrage (P) dudit axe d'approche finale. (Aa) :

   - on détermine un point de référence (R) à partir duquel le pilote est censé engager une rotation de l'aéronef pour rejoindre un plan vertical contenant l'axe (Ap) de la piste d'atterrisage (5), selon une trajectoire de référence (T) ; et
   - on détermine, comme point d'ancrage (P), le point qui est tel que la distance entre ce dernier et ledit point de référence (R) est sensiblement égale à la distance entre ledit point de référence (R) et le seuil (S) de la piste d'atterrissage (5).

9. Procédé selon l'une des revendications 1 et 2, **caractérisé en ce que**, lorsque la projection au sol dudit segment caractéristique (6) n'est pas alignée avec l'axe (Ap) de la piste d'atterrissage (5), pour déterminer, à l'étape d), ledit point d'ancrage (P) dudit axe d'approche finale (Aa) :

   - on détermine une droite horizontale (D) qui est située dans un plan horizontal se trouvant à une altitude prédéterminée et qui est confondue en partie avec la projection verticale sur ledit plan horizontal dudit segment caractéristique (6) ;
   - on détermine un point intermédiaire (I) qui correspond à l'intersection de ladite droite horizontale (D) avec la projection verticale sur ledit plan horizontal de l'axe (Ap) de la piste d'atterrissage (5) ;
   - on détermine un cercle (C) ayant comme centre ledit point intermédiaire (I) et comme rayon la distance entre ce point intermédiaire (I) et la projection verticale sur ledit plan horizontal du seuil (S) de la piste d'atterrissage (5) ; et
   - on détermine, comme point d'ancrage (P), l'intersection entre ledit cercle (C) et ladite droite horizontale (D).

10. Procédé selon l'une des revendications 1 et 2, **caractérisé en ce que**, lorsque la projection au sol dudit segment caractéristique (6) n'est pas alignée avec l'axe (Ap) de la piste d'atterrissage (5), à l'étape d), on utilise comme point d'ancrage (P) dudit axe d'approche finale (Aa) un point final prédéterminé, qui est caractéristique dudit mode d'approche sélectionné par le pilote de l'aéronef.

11. Procédé selon l'une des revendications 1 et 2, **caractérisé en ce que**, lorsque la projection au sol dudit segment caractéristique (6) n'est pas alignée avec l'axe (Ap) de la piste d'atterrissage (5), pour déterminer, à l'étape d), ledit point d'ancrage (P) dudit axe d'approche finale (Aa) :

- on détermine un point final prédéterminé, qui est caractéristique dudit mode d'approche sélectionné par le pilote ; et
- on détermine, comme point d'ancrage (P), le point ayant :

comme longitude et latitude, la longitude et la latitude dudit point final ; et comme altitude, une altitude prédéterminée

12. Procédé selon l'une des revendications 1 et 2, **caractérisé en ce que**, lorsque la projection au sol dudit segment caractéristique (6) est parallèle à l'axe (Ap) de la piste d'atterrissage (5), pour déterminer, à l'étape d), ledit point d'ancrage (P) dudit axe d'approche finale (Aa) :

- on détermine un point de référence (R1) à partir duquel le pilote est censé engager une rotation de l'aéronef pour rejoindre un plan vertical contenant l'axe (Ap) de la piste d'atterrissage (5), selon une trajectoire de référence (T1) ;
- on détermine ladite trajectoire de référence (T1) ; et
- on détermine, comme point d'ancrage (P), le point (P2) qui est tel que la distance entre ce dernier et ledit point de référence (R1) est sensiblement égale à la distance, le long de ladite trajectoire de référence (T1), entre ledit point de référence (R1) et la projection verticale du seuil (S) de la piste d'atterrissage (5) sur ladite trajectoire de référence (T1).

13. Procédé selon l'une des revendications 1 et 2, **caractérisé en ce que**, lorsque la projection au sol dudit segment caractéristique (6) est parallèle à l'axe (Ap) de la piste d'atterrissage (5), pour déterminer, à l'étape d), ledit point d'ancrage (P) dudit axe d'approche finale (Aa) :

- on détermine un point de référence (R1) à partir duquel le pilote est censé engager une rotation de l'aéronef pour rejoindre un plan vertical contenant l'axe (Ap) de la piste d'atterrissage (5), selon une trajectoire de référence (T1) ;
- on détermine une droite horizontale (D) qui est située dans un plan horizontal se trouvant à une altitude prédéterminée et qui est confondue en partie avec la projection verticale sur ledit plan horizontal dudit segment caractéristique (6) ;
- on détermine un cercle (C1) ayant comme centre ledit point de référence (R1) et comme rayon la distance entre ce point de référence (R1) et la projection verticale sur ledit plan horizontal du seuil (S) de la piste d'atterrissage (5) ; et
- on détermine, comme point d'ancrage (P), le point d'intersection (P1) entre ledit cercle (C1) et ladite droite horizontale (D).

14. Procédé selon l'une dès revendications 1 et 2, **caractérisé en ce que**, lorsque la projection au sol dudit segment caractéristique (6) est parallèle à l'axe (Ap) de la piste d'atterrissage (5), pour déterminer, à l'étape d), ledit point d'ancrage (P) dudit axe d'approche finale (Aa) :

- on détermine une droite horizontale (D) qui est située dans un plan horizontal se trouvant à une altitude prédéterminée et qui est confondue en partie avec la projection verticale sur ledit plan horizontal dudit segment caractéristique (6) ;
- on détermine un point intermédiaire correspondant à la projection verticale sur ledit plan horizontal du seuil (S) de ladite piste d'atterrissage (5) ; et
- on détermine, comme point d'ancrage (P), le point (P3) correspondant à la projection orthogonale dudit point intermédiaire sur ladite droite horizontale (D).

15. Procédé selon l'une quelconque des revendications 4 à 7, 9 et 11 à 14, **caractérisé en ce que** ladite altitude prédéterminée correspond à l'altitude du seuil (S) de la piste d'atterrissage (5).

16. Procédé selon l'une quelconque des revendications 4 à 7, 9 et 11 à 14, **caractérisé en ce que** ladite altitude prédéterminée correspond à l'altitude du seuil (S) de la piste d'atterrissage (5), augmentée d'une valeur prédéterminée.

17. Procédé selon l'une quelconque des revendications 4 à 7, 9 et 11 à 14, **caractérisé en ce que** ladite altitude prédéterminée correspond à l'altitude du sol à l'emplacement dudit point d'ancrage (P).

18. Procédé selon l'une quelconque des revendications 1 à 17, **caractérisé en ce que** ledit segment caractéristique (6) correspond au dernier segment de ladite trajectoire d'arrivée.

**19.** Procédé selon l'une quelconque des revendications 1 à 17,
**caractérisé en ce que** ledit segment caractéristique (6) correspond au segment de ladite trajectoire d'arrivée qui franchit une altitude qui est caractéristique du mode d'approche sélectionné par le pilote de l'aéronef.

**20.** Dispositif pour déterminer un axe d'approche finale (Aa) d'un aéronef pour une approche de non précision en vue d'un atterrissage de l'aéronef sur une piste d'atterrissage (5), ledit dispositif (1) comportant des moyens (2, 3) pour :

- déterminer un mode d'approche qui a été sélectionné par le pilote de l'aéronef, parmi une pluralité de modes d'approche prédéterminés ;
- sélectionner un segment caractéristique (6) d'une trajectoire d'arrivée qui est relative au mode d'approche sélectionné ainsi déterminé ;
- déterminer l'orientation de la projection au sol dudit segment caractéristique (6), par rapport à l'axe (Ap) de ladite piste d'atterrissage (5), **caractérisé en ce que** ledit dispositif (1) comporte, de plus, des moyens pour déterminer, en fonction de cette orientation :

  ■ un point d'ancrage (P) dudit axe d'approche finale (Aa) ;
  ■ l'orientation (α) dans un plan horizontal dudit axe d'approche finale (Aa) ; et
  ■ la pente (β) dudit axe d'approche finale (Aa).

**21.** Aéronef,
**caractérisé en ce qu'**il comporte un dispositif (1) tel que celui spécifié sous la revendication 20.


**Claims**

**1.** A method for determining a final approach path (Aa) of an aircraft for a non-precision approach, for the purpose of landing the aircraft on a runway (5), the method comprising the following steps:

a) there is determined an approach mode which has been selected by the pilot of the aircraft from among a plurality of predetermined approach modes;
b) there is selected a characteristic segment (6) of an arrival path which relates to the selected approach mode thus determined;
c) the orientation of the projection on the ground of the said characteristic segment (6) is determined with respect to the center line (Ap) of the said runway (5); **characterized in that**
d) depending on this orientation, there is determined:

- an anchoring point (P) of the said final approach path (Aa);
- the orientation (α) in a horizontal plane of the said final approach path (Aa); and
- the slope (β) of the said final approach path (Aa).

**2.** The method as claimed in claim 1, **characterized in that**, in step d), there is determined:

- as the orientation (α) of the said final approach path (Aa), the orientation of the said characteristic segment (6); and
- as the slope (β) of the said final approach path (Aa), the slope of the said characteristic segment (6).

**3.** The method as claimed in either of claims 1 and 2, **characterized in that**, when the projection on the ground of the said characteristic segment (6) is aligned with the center line (Ap) of the runway (5), the following operations are carried out in step d):

d1) there is determined a characteristic point (MAP) corresponding to the limit point at which the pilot must overshoot when the approach is aborted;
d2) there is determined the relative position between the projection on the ground of the said characteristic point (MAP) and the threshold (S) of the runway (5); and
d3) the said anchoring point (P) of the said final approach path (Aa) is determined according to this relative position.

**4.** The method as claimed in claim 3, **characterized in that**, when the projection on the ground of the characteristic point (MAP) is located on or downstream of the threshold (S) of the runway (5) with respect to the direction of approach (E) of the aircraft, in step d3) there is determined, as an anchoring point (P) of the said final approach path (Aa), the point of intersection between the said characteristic segment (6) and a horizontal plane located at a predetermined altitude.

**5.** The method as claimed in claim 3, **characterized in that**, when the projection on the ground of the characteristic point (MAP) is located upstream of the threshold (S) of the runway (5) with respect to the direction of approach (E) of the aircraft, in step d3) there is determined, as an anchoring point (P) of the said final approach path (Aa), the point of intersection (Pi) of the extension toward the ground of the said characteristic segment (6) and a horizontal plane located at a predetermined altitude.

**6.** The method as claimed in either of claims 1 and 2, **characterized in that**, when the projection on the ground of the said characteristic segment (6) is not aligned with the center line (Ap) of the runway (5), in order to determine, in step d), the said anchoring point (P) of the said final approach path (Aa):

- there is determined a reference point (R) from which the pilot is considered to initiate a rotation of the aircraft in order to join a vertical plane containing the center line (Ap) of the runway (5), according to a reference path (T);
- the said reference path (T) is determined;
- there is determined a horizontal straight line (D) which is located in a horizontal plane which is at a predetermined altitude and which is partially merged with the vertical projection on the said horizontal plane of the said characteristic segment (6); and
- there is determined, as an anchoring point (P), the point which is such that:

• on the one hand, the vertical projection of the final approach path (Aa) on the said horizontal plane is partially merged with the said horizontal straight line (D); and
• on the other hand, the distance between the said point and the reference point (R) along the final approach path (Aa) is substantially equal to the distance between the said reference point (R) and the threshold (S) of the runway (5) along the said reference path (T).

**7.** The method as claimed in either of claims 1 and 2, **characterized in that**, when the projection on the ground of the said characteristic segment (6) is not aligned with the center line (Ap) of the runway (5), in order to determine, in step d), the said anchoring point (P) of the said final approach path (Aa):

- there is determined a reference point (R) from which the pilot is considered to initiate a rotation of the aircraft in order to join a vertical plane containing the center line (Ap) of the runway (5), according to a reference path (T);
- the said reference path (T) is determined; and
- there is determined, as an anchoring point (P), the point which is such that the distance between the latter and the vertical projection of the said reference point (R) on a horizontal plane located at a predetermined altitude is substantially equal to the distance between the vertical projections on the said horizontal plane of the said reference point (R) and of the threshold (S) of the runway (5), along the vertical projection of the said reference path (T) on the said horizontal plane.

**8.** The method as claimed in either of claims 1 and 2, **characterized in that**, when the projection on the ground of the said characteristic segment (6) is not aligned with the center line (Ap) of the runway (5), in order to determine, in step d), the said anchoring point (P) of the said final approach path (Aa):

- there is determined a reference point (R) from which the pilot is considered to initiate a rotation of the aircraft in order to join a vertical plane containing the center line (Ap) of the runway (5), according to a reference path (T); and
- there is determined, as an anchoring point (P), the point which is such that the distance between the latter and the said reference point (R) is substantially equal to the distance between the said reference point (R) and the threshold (S) of the runway (5).

**9.** The method as claimed in either of claims 1 and 2, **characterized in that**, when the projection on the ground of the said characteristic segment (6) is not aligned with the center line (Ap) of the runway (5), in order to determine, in step d), the said anchoring point (P) of the said final approach path (Aa):

- there is determined a horizontal straight line (D) which is located in a horizontal plane which is at a predetermined altitude and which is partially merged with the vertical projection on the said horizontal plane of the said characteristic segment (6);
- there is determined an intermediate point (I) which corresponds to the intersection between the said horizontal straight line (D) and the vertical projection on the said horizontal plane of the center line (Ap) of the runway (5);
- there is determined a circle (C) having the said intermediate point (I) as its center and the distance between this intermediate point (I) and the vertical projection on the said horizontal plane of the threshold (S) of the runway (5) as its radius; and
- there is determined, as an anchoring point (P), the intersection between the said circle (C) and the said horizontal straight line (D).

**10.** The method as claimed in either of claims 1 and 2, **characterized in that**, when the projection on the ground of the said characteristic segment (6) is not aligned with the center line (Ap) of the runway (5), in step d), there is used, as an anchoring point (P) of the said final approach path (Aa), a predetermined final point, which is characteristic of the said approach mode selected by the pilot of the aircraft.

**11.** The method as claimed in either of claims 1 and 2, **characterized in that**, when the projection on the ground of the said characteristic segment (6) is not aligned with the center line (Ap) of the runway (5), in order to determine, in step d), the said anchoring point (P) of the said final approach path (Aa) :

- there is determined a predetermined final point, which is characteristic of the said approach mode selected by the pilot; and
- there is determined, as an anchoring point (P), the point having:

  • as longitude and latitude, the longitude and latitude of the said final point; and
  • as altitude, a predetermined altitude.

12. The method as claimed in either of claims 1 and 2, **characterized in that**, when the projection on the ground of the said characteristic segment (6) is parallel with the center line (Ap) of the runway (5), in order to determine, in step d), the said anchoring point (P) of the said final approach path (Aa):

- there is determined a reference point (R1) from which the pilot is considered to initiate a rotation of the aircraft in order to join a vertical plane containing the center line (Ap) of the runway (5), according to a reference path (T1);
- the said reference path (T1) is determined; and
- there is determined, as an anchoring point (P), the point (P2) which is such that the distance between the latter and the said reference point (R1) is substantially equal to the distance, along the said reference path (T1), between the said reference point (R1) and the vertical projection of the threshold (S) of the runway (5) on the said reference path (T1).

13. The method as claimed in either of claims 1 and 2, **characterized in that**, when the projection on the ground of the said characteristic segment (6) is parallel with the center line (Ap) of the runway (5), in order to determine, in step d), the said anchoring point (P) of the said final approach path (Aa):

- there is determined a reference point (R1) from which the pilot is considered to initiate a rotation of the aircraft in order to join a vertical plane containing the center line (Ap) of the runway (5), according to a reference path (T1);
- there is determined a horizontal straight line (D) which is located in a horizontal plane which is at a predetermined altitude and which is partially merged with the vertical projection on the said horizontal plane of the said characteristic segment (6);
- there is determined a circle (C1) having the said reference point (R1) as its center and the distance between this reference point (R1) and the vertical projection on the said horizontal plane of the threshold (S) of the runway (5) as its radius; and
- there is determined, as an anchoring point (P), the point of intersection (P1) between the said circle (C1) and the said horizontal straight line (D).

14. The method as claimed in either of claims 1 and 2, **characterized in that**, when the projection on the ground of the said characteristic segment (6) is parallel with the center line (Ap) of the runway (5), in order to determine, in step d), the said anchoring point (P) of the said final approach path (Aa):

- there is determined a horizontal straight line (D) which is located in a horizontal plane which is at a predetermined altitude and which is partially merged with the vertical projection on the said horizontal plane of the said characteristic segment (6);
- there is determined an intermediate point which corresponds to the vertical projection on the said horizontal plane of the threshold (S) of the said runway (5); and
- there is determined, as an anchoring point (P), the point (P3) corresponding to the orthogonal projection of the said intermediate point on the said horizontal straight line (D).

15. The method as claimed in any one of claims 4 to 7, 9 and 11 to 14, **characterized in that** the said predetermined altitude corresponds to the altitude of the threshold (S) of the runway (5).

16. The method as claimed in any one of claims 4 to 7, 9 and 11 to 14, **characterized in that** the said predetermined altitude corresponds to the altitude of the threshold (S) of the runway (5), increased by a predetermined value.

17. The method as claimed in any one of claims 4 to 7, 9 and 11 to 14, **characterized in that** the said predetermined altitude corresponds to the altitude of the ground at the location of the said anchoring point (P).

18. The method as claimed in any one of claims 1 to 17, **characterized in that** the said characteristic segment (6) corresponds to the last segment of the said arrival path.

19. The method as claimed in any one of claims 1 to 17, **characterized in that** the said characteristic segment (6) corresponds to the segment of the said arrival path which passes through an altitude which is characteristic of the approach mode selected by the pilot of the aircraft.

20. A device for determining a final approach path (Aa) of an aircraft for a non-precision approach, for the purpose of landing the aircraft on a runway (5), the said device (1) comprising means (2, 3) for:

- determining an approach mode which has been selected by the pilot of the aircraft from among a plurality of predetermined approach modes;
- selecting a characteristic segment (6) of an arrival path which relates to the selected approach mode thus determined;
- determining the orientation of the projection on the ground of the said characteristic segment (6) with respect to the center line (Ap) of the said runway (5); **characterized in that** the said device (1) comprises, moreover, means for determining depending on this orientation:

- an anchoring point (P) of the said final approach path (Aa);
- the orientation (α) in a horizontal plane of the said final approach path (Aa); and
- the slope (β) of the said final approach path (Aa).

21. An aircraft **characterized in that** it comprises a device (1) such as that specified under claim 20.

**Patentansprüche**

1. Verfahren zum Bestimmen einer Endanfluglinie (Aa) eines Flugzeugs für einen Nicht-Präzisionsanflug bei einer Landung eines Flugzeugs auf einer Landebahn (5), wobei das Verfahren die folgenden Schritte umfasst:

a) es wird ein Anflugmodus bestimmt, der durch den Piloten des Flugzeugs ausgewählt wurde, ausgehend von einer Mehrzahl von vorbestimmten Anflugmodi;
b) es wird ein charakteristischer Abschnitt (6) einer Anflugbahn ausgewählt, die mit dem auf diese Weise bestimmten, ausgewählten Anflugmodus in Beziehung steht;
c) es wird die Ausrichtung der Projektion des charakteristischen Abschnitts (6) auf dem Boden in Bezug zu der Linie (Ap) der Landebahn (5) bestimmt; **dadurch gekennzeichnet, dass** d) in Abhängigkeit von dieser Ausrichtung bestimmt wird:

- ein Ankerpunkt (P) der Endanfluglinie (Aa);
- eine Ausrichtung (α) in einer horizontalen Ebene der Endanfluglinie (Aa); und
- die Steigung (β) der Endanfluglinie (Aa).

2. Verfahren nach Anspruch 1, **dadurch gekennzeichnet, dass** am Schritt d) bestimmt wird:

- als Ausrichtung (α) der Endanfluglinie (Aa) die Ausrichtung des charakteristischen Abschnitts (6); und
- als Steigung (β) der Endanfluglinie (Aa) die Steigung des charakteristischen Abschnitts (6).

3. Verfahren nach einem der Ansprüche 1 und 2, **dadurch gekennzeichnet, dass**, wenn die Projektion des charakteristischen Abschnitts (6) auf dem Boden mit der Linie (Ap) der Landebahn (5) ausgerichtet ist, am Schritt d) die folgenden Vorgänge ausgeführt werden:

d1) es wird ein charakteristischer Punkt (MAP) bestimmt, der dem Grenzpunkt entspricht, bei welchem der Pilot wieder Gas geben muss, wenn der Anflug verpasst ist;
d2) es wird die relative Position zwischen der Projektion des charakteristischen Punktes (MAP) auf dem Boden und der Schwelle (S) der Landebahn (5) bestimmt; und
d3) es wird in Abhängigkeit von dieser relativen Position der Ankerpunkt (P) der Endanfluglinie (Aa) bestimmt.

4. Verfahren nach Anspruch 3, **dadurch gekennzeichnet, dass**, wenn die Projektion des charakteristischen Punktes (MAP) auf dem Boden auf dem Schwellenwert (S) der Landebahn (5) oder stromabwärts davon in Anflugrichtung (E) des Flugzeugs liegt, am Schritt d3) als Ankerpunkt (P) der Endanfluglinie (Aa) der Schnittpunkt des charakteristischen Abschnitts (6) mit einer horizontalen Ebene bestimmt wird, die auf einer vorbestimmten Höhe liegt.

5. Verfahren nach Anspruch 3, **dadurch gekennzeichnet, dass**, wenn die Projektion des charakteristischen Punktes (MAP) auf dem Boden stromaufwärts der Schwelle (S) der Landebahn (5) in Anflugrichtung (E) des Flugzeugs liegt, am Schritt d3) als Ankerpunkt (P) der Endanfluglinie (Aa) der Schnittpunkt (Pi) der Verlängerung in Richtung des Bodens des charakteristischen Abschnitts (6) mit einer horizontalen Ebene, die auf einer vorbestimmten Höhe liegt, bestimmt wird.

6. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, zur Bestimmung des Ankerpunktes (P) der Endanfluglinie (Aa) am Schritt d):

- ein Bezugspunkt (R) bestimmt wird, von dem aus der Pilot veranlasst wird, eine Drehung des Flugzeugs gemäß einer Bezugs-Flugbahn (T) zu beginnen, um in eine vertikale Ebene zu gelangen, welche die Achse (Ap) der Landebahn (5) enthält;

- die Bezugs-Flugbahn (T) bestimmt wird;

- eine horizontale Gerade (D) bestimmt wird, die in einer horizontalen Ebene liegt, welche sich auf einer vorbestimmten Höhe befindet und die teilweise mit der vertikalen Projektion auf der horizontalen Ebene des charakteristischen Abschnitts (6) zusammenfällt; und

- als Ankerpunkt (P) der Punkt bestimmt wird, der so definiert ist, dass:

  • einerseits die vertikale Projektion der Endanfluglinie (Aa) auf der horizontalen Ebene teilweise mit der horizontalen Geraden (D) zusammenfällt; und
  • andererseits der Abstand zwischen dem Punkt und dem Bezugspunkt (R) gemäß der Endanfluglinie (Aa) im Wesentlichen gleich dem Abstand zwischen dem Bezugspunkt (R) und der Schwelle (S) der Landebahn (5) entlang der Bezugs-Flugbahn (T) ist.

7. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, zur Bestimmung des Ankerpunktes (P) der Endanfluglinie (Aa) am Schritt d):

  - ein Bezugspunkt (R) bestimmt wird, von dem aus der Pilot veranlasst wird, eine Drehung des Flugzeugs gemäß einer Bezugs-Flugbahn (T) zu beginnen, um in eine vertikale Ebene zu gelangen, welche die Linie (AP) der Landebahn (5) enthält;

  - die Bezugs-Flugbahn (T) bestimmt wird; und

  - als Ankerpunkt (P) der Punkt bestimmt wird, der so definiert ist, dass der Abstand zwischen diesem und der vertikalen Projektion des Bezugspunktes (R) auf der horizontalen Ebene, die auf einer vorbestimmten Höhe liegt, im Wesentlichen gleich dem Abstand zwischen den vertikalen Projektionen des Bezugspunktes (R) auf der horizontalen Ebene und der Schwelle (S) der Landebahn (5) ist, gemäß der vertikalen Projektion der Bezugs-Flugbahn (T) auf der horizontalen Ebene.

8. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, zur Bestimmung des Ankerpunktes (P) der Endanfluglinie (Aa) am Schritt d):

  - ein Bezugspunkt (R) bestimmt wird, von dem aus der Pilot veranlasst wird, eine Drehung des Flugzeugs gemäß einer Bezugs-Flugbahn (T) zu beginnen, um in eine vertikale Ebene zu gelangen, welche die Linie (Ap) der Landebahn (5) enthält; und

  - als Ankerpunkt (P) der Punkt bestimmt wird, der so definiert ist, dass der Abstand zwischen diesem und dem Bezugspunkt (R) im Wesentlichen gleich dem Abstand zwischen dem Bezugspunkt (R) und der Schwelle (S) der Landebahn (5) ist.

9. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, zur Bestimmung des Ankerpunktes (P) der Endanfluglinie (Aa) am Schritt d):

  - eine horizontale Gerade (D) bestimmt wird, die in einer horizontalen Ebene liegt, welche sich auf einer vorbestimmten Höhe befindet und die teilweise mit der vertikalen Projektion der horizontalen Ebene des charakteristischen Abschnitts (6) zusammenfällt;

  - ein Zwischenpunkt (I) bestimmt wird, der dem Schnittpunkt der horizontalen Geraden (D) mit der vertikalen Projektion der Linie (Ap) der Landebahn (5) auf der horizontalen Ebene entspricht;

  - ein Kreis (C) bestimmt wird, der als Zentrum den Zwischenpunkt (I) und als Radius den Abstand zwischen diesem Zwischenpunkt (I) und der vertikalen Projektion der Schwelle (S) der Landebahn (5) auf der horizontalen Ebene hat; und

  - als Ankerpunkt (P) der Schnittpunkt zwischen diesem Kreis (C) und der horizontalen Geraden (D) bestimmt wird.

10. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, am Schritt d) als Ankerpunkt (P) der Endanfluglinie (Aa) ein vorbestimmter Endpunkt verwendet wird, der für den vom Piloten des Flugzeugs ausgewählten Anflugmodus charakteristisch ist.

11. Verfahren nach einem der Ansprüche 1 und 2, **dadurch gekennzeichnet, dass**, wenn die Projektion des charakteristischen Abschnitts (6) auf dem Boden nicht mit der Linie (Ap) der Landebahn (5) ausgerichtet ist, zur Bestimmung des Ankerpunktes (P) der Endanfluglinie (Aa) am Schritt d):

- ein vorbestimmter Endpunkt bestimmt wird, der für den vom Piloten ausgewählten Anflugmodus charakteristisch ist; und

- als Ankerpunkt (P) der Punkt bestimmt wird, der aufweist:

  • als Länge und Breite die Länge und Breite des Endpunktes; und
  • als Höhe eine vorbestimmte Höhe.

12. Verfahren nach einem der Ansprüche 1 und 2, **dadurch gekennzeichnet, dass**, wenn die Projektion des charakteristischen Abschnitts (6) auf dem Boden parallel zur Linie (Ap) der Landebahn (5) ist, zur Bestimmung des Ankerpunktes (P) der Endanfluglinie (Aa) am Schritt d):

  - ein Bezugspunkt (R1) bestimmt wird, von dem aus der Pilot veranlasst wird, eine Drehung des Flugzeugs gemäß einer Bezugs-Flugbahn (T1) zu beginnen, um zu einer vertikalen Ebene zu gelangen, welche die Achse (Ap) der Landebahn (5) enthält;
  - die Bezugs-Flugbahn (T1) bestimmt wird; und
  - als Ankerpunkt (P) der Punkt (P2) bestimmt wird, der so definiert ist, dass der Abstand zwischen diesem und dem Bezugspunkt (R1) im Wesentlichen gleich dem Abstand entlang der Bezugs-Flugbahn (T1) zwischen dem Bezugspunkt (R1) und der vertikalen Projektion der Schwelle (S) der Landebahn (5) auf der Bezugs-Flugbahn (T1) ist.

13. Verfahren nach einem der Ansprüche 1 und 2, **dadurch gekennzeichnet, dass**, wenn die Projektion des charakteristischen Abschnitts (6) auf dem Boden parallel zur Linie (Ap) der Landebahn (5) ist, zur Bestimmung des Ankerpunktes (P) der Endanfluglinie (Aa) am Schritt d):

  - ein Bezugspunkt (R1) bestimmt wird, von dem aus der Pilot veranlasst wird, eine Drehung des Flugzeugs gemäß einer Bezugsflugbahn (T1) zu beginnen, um in eine vertikale Ebene zu gelangen, welche die Linie (Ap) der Landebahn (5) enthält;
  - eine horizontale Gerade (D) bestimmt wird, die in einer horizontalen Ebene liegt, welche sich auf einer vorbestimmten Höhe befindet und die teilweise mit der vertikalen Projektion des charakteristischen Abschnitts (6) auf der horizontalen Ebene zusammenfällt;
  - ein Kreis (C1) bestimmt wird, der als Zentrum den Bezugspunkt (R1) und als Radius den Abstand zwischen diesem Bezugspunkt (R1) und der vertikalen Projektion der Schwelle (S) der Landebahn (5) auf der horizontalen Ebene hat; und

- als Ankerpunkt (P) der Schnittpunkt (P1) zwischen dem Kreis (C1) und der horizontalen Geraden (D) bestimmt wird.

14. Verfahren nach einem der Ansprüche 1 und 2, **dadurch gekennzeichnet, dass**, wenn die Projektion des charakteristischen Abschnitts (6) auf dem Boden parallel zur Achse (Ap) der Landebahn (5) ist, zur Bestimmung des Ankerpunktes (P) der Endanfluglinie (Aa) am Schritt d):

  - eine horizontale Gerade (D) bestimmt wird, die in einer horizontalen Ebene liegt, welche sich auf einer vorbestimmten Höhe befindet und die teilweise mit der vertikalen Projektion des charakteristischen Abschnitts (6) auf der horizontalen Ebene zusammenfällt;
  - ein Zwischenpunkt bestimmt wird, der der vertikalen Projektion der Schwelle (S) der Landebahn (5) auf der horizontalen Ebene entspricht; und
  - als Ankerpunkt (P) der Punkt (P3) bestimmt wird, welcher der orthogonalen Projektion des Zwischenpunktes auf der horizontalen Geraden (D) entspricht.

15. Verfahren nach einem der Ansprüche 4 bis 7, 9 und 11 bis 14, **dadurch gekennzeichnet, dass** die vorbestimmte Höhe einer Höhe der Schwelle (S) der Landebahn (5) entspricht.

16. Verfahren nach einem der Ansprüche 4 bis 7, 9 und 11 bis 14, **dadurch gekennzeichnet, dass** die vorbestimmte Höhe der Höhe der Schwelle (S) der Landebahn (5) um einen vorbestimmten Wert erhöht entspricht.

17. Verfahren nach einem der Ansprüche 4 bis 7, 9 und 11 bis 14, **dadurch gekennzeichnet, dass** die vorbestimmte Höhe der Höhe des Bodens an der Stelle des Ankerpunktes (P) entspricht.

18. Verfahren nach einem der Ansprüche 1 bis 17, **dadurch gekennzeichnet, dass** der charakteristische Abschnitt (6) dem letzten Abschnitt der Ankunftsbahn entspricht.

19. Verfahren nach einem der Ansprüche 1 bis 17, **dadurch gekennzeichnet, dass** der charakteristische Abschnitt (6) dem Abschnitt der Ankunftsbahn entspricht, welcher eine Höhe überquert, die für den vom Piloten des Flugzeugs ausgewählten Anflugmodus charakteristisch ist.

20. Vorrichtung zum Bestimmen einer Endanfluglinie (Aa) eines Flugzeugs für einen Nicht-Präzisionsanflug bei einer Landung des Flugzeugs auf einer Landebahn (5), wobei die Vorrichtung (1) Mittel (2, 3) umfasst, um:

- einen Anflugmodus zu bestimmen, der von dem Piloten des Flugzeugs aus einer Mehrzahl von vorbestimmten Anflugmodi ausgewählt wurde;
- einen charakteristischen Abschnitt (6) einer Ankunftsbahn auszuwählen, die einen Bezug zu dem so bestimmten ausgewählten Anflugmodus hat;
- die Ausrichtung der Projektion des charakteristischen Abschnitts (6) auf dem Boden in Bezug zu der Linie (Ap) der Landebahn (5) zu bestimmen,

**dadurch gekennzeichnet, dass** die Vorrichtung (1) ferner Mittel umfasst zum Bestimmen in Abhängigkeit von dieser Ausrichtung:

• eines Ankerpunktes (P) der Endanfluglinie (Aa);
• der Ausrichtung ($\alpha$) in einer horizontalen Ebene der Endanfluglinie (Aa); und
• der Steigung ($\beta$) der Endanfluglinie (Aa).

21. Flugzeug,
**dadurch gekennzeichnet, dass** dieses eine Vorrichtung (1) umfasst, wie sie in Anspruch 20 angegeben ist.

Fig. 1

Fig. 2

TA

TC      TB

MAP      MDA

5

## Fig. 3

E

6

MAP

β

α

N

5   Pi

## Fig. 4

Fig. 5

Fig. 6

EP 1 459 978 B1

Fig. 7

Fig. 8

EP 1 459 978 B1